# FASCICULE DE BREVET EUROPEEN

(11) **EP 1 354 158 B1**
(45) Date de publication et mention de la délivrance du brevet: **29.08.2007**
(21) Numéro de dépôt: 02700409.2
(22) Date de dépôt: 24.01.2002
(51) Int. Cl.: F16K 17/194, F16K 17/19, F16K 47/10

(54) **CLAPET DE CONTROLE DE LA PRESSION GAZEUSE INTERNE D'UN RESERVOIR**
VENTIL FÜR DIE KONTROLLE DES GASDRUCKS IN EINEM BEHÄLTER
VALVE FOR CONTROLLING A TANK INTERNAL GAS PRESSURE

(30) Priorité: 25.01.2001 FR 0101026
(43) Date de publication de la demande: 22.10.2003
(73) Titulaire: EATON S.A.M., 98000 Monaco (MC)
(72) Inventeur: HERNANDEZ, Michel, F-06480 La Colle Sur Loup (FR); GOUBELY, Aimé, F-06340 La Trinité (FR); SERTIER, Bruno, F-06500 Menton (FR)
(74) Mandataire: Littolff, Denis
(86) Numéro de dépôt international: PCT/FR2002/000302
(87) Numéro de publication internationale: WO 2002/059512

(56) Documents cités:
- JP-A- 56 101 482
- US-A- 1 637 076
- US-A- 1 724 878
- US-A- 4 457 325

## Description

La présente invention a trait à un clapet de contrôle de la pression gazeuse interne d'un réservoir de liquide, destiné à coopérer avec un orifice pratiqué dans la partie supérieure de celui-ci, et autorisant un écoulement gazeux vers le réservoir lorsque la pression interne y est inférieure à la pression externe. Ce type de clapet, dans sa relation avec l'orifice du réservoir, doit également permettre un écoulement du gaz de l'intérieur vers l'extérieur lorsque la différence entre la pression interne et la pression externe atteint un seuil prédéterminé.

Selon une application préférentielle, ces clapets peuvent être utilisés avec les réservoirs de carburant de véhicules automobiles, notamment couplés à des valves anti-retournement.

Les réservoirs de carburants génèrent une quantité importante de vapeur d'essence à peu près quelle que soit leur phase de fonctionnement : au remplissage, en cours de fonctionnement du moteur, à l'arrêt de celui-ci dans des conditions de température élevée, etc. La gestion de ces vapeurs d'essence est en général réalisée à l'aide de plusieurs clapets de ventilation spécifiques (valves de retournement, équipées ou non de dispositifs de type bille empêchant le sur-remplissage qui peuvent sinon être intégrés à un clapet séparé, valve de purge des vapeurs pendant le remplissage du réservoir, etc.). Les vapeurs qui sont collectées par cette clapetterie sont dirigées vers un filtre à charbon actif chargé de les stocker, et de les purger ensuite régulièrement vers le collecteur d'admission du moteur, sur ordre du calculateur intégré au véhicule qui gère le fonctionnement du moteur.

Il est par ailleurs souvent nécessaire d'autoriser la circulation de vapeur depuis l'atmosphère vers le réservoir, notamment dans certaines conditions de température qui génèrent une dépression du réservoir par rapport à la pression ambiante. Il en est par exemple ainsi lorsque l'essence est encore chaude et que le véhicule passe dans une ambiance thermique froide. Il faut alors limiter la dépression du réservoir résultant de ce refroidissement.

Dans les systèmes actuels, comme indiqué ci-dessus, la gestion des vapeurs d'essence est en général réalisée à l'aide de plusieurs clapets de ventilation distincts qui sont intégrés en partie haute du réservoir d'essence, et permettent la collecte desdites vapeurs via le filtre à charbon actif lorsque le niveau d'essence n'atteint pas le seuil de fermeture de ces clapets. Entre ces clapets et ledit filtre, se trouve de plus dans certaines configurations un type spécifique de clapet qui est monté en série, le clapet de contrôle de pression du réservoir, qui est constitué d'un boîtier étanche, muni d'une ou plusieurs connectiques pneumatiques d'entrée (selon le nombre de clapets de ventilation en amont) et d'une connectique de sortie vers le filtre à charbon actif. Ce clapet de contrôle n'existe cependant pas dans toutes les configurations, et notamment pas lorsque la valve anti-retournement est munie d'un dispositif empêchant le sur-remplissage de type bille et couplée à un clapet de limitation de niveau de remplissage de réservoir.

Ce clapet a une double fonction. En premier lieu, dans le cas d'un écart de pression positif entre le réservoir et l'atmosphère, il garantit la purge des vapeurs par ouverture d'un passage au-dessus d'un seuil de pression prédéfini. Ce seuil de pression d'ouverture n'est cependant jamais atteint pendant le remplissage, au cours duquel les vapeurs sont collectées par exemple par un circuit spécifique de purge des vapeurs disposé parallèlement au réservoir, via une canalisation coaxiale au tube de remplissage, débouchant dans l'atmosphère. Dans le système américain, cette canalisation coaxiale n'existe pas, et elle est remplacée par une valve de purge des vapeurs en direction du filtre à charbon actif. Dans les deux cas, la limitation du remplissage du réservoir et la gestion des vapeurs au moment du remplissage ne sont régies que par le système parallèle qui est prévu à cet effet.

En second lieu, ces clapets de contrôle de la pression du réservoir disposés entre la clapetterie traditionnelle et le filtre à charbon actif doivent permettre un débit de vapeur inverse, c'est-à-dire allant de l'atmosphère vers le réservoir. C'est parfois nécessaire en cours de fonctionnement du moteur, mais plus généralement à l'arrêt, lors du refroidissement rapide de l'essence du réservoir. La dépression qui résulte de ce refroidissement rapide doit pouvoir être limitée par un débit de vapeur allant de l'atmosphère vers le réservoir. Le clapet est donc à cet effet muni d'une fonction de débit retour.

L'inconvénient de cette solution classique réside principalement dans la multiplication du nombre de valves ou clapets distincts, et par conséquent du nombre de connexions spécifiques. La multiplication des points de connexion augmente ensuite les risques de perméabilité par rapport aux normes antipollution sur les émissions de vapeurs d'essence. En outre, on multiplie les risques de problèmes au montage, et l'encombrement de la pluralité des valves utilisées n'est pas négligeable et constitue un inconvénient supplémentaire.

L'ensemble des conduits, connexions, etc. présente de plus l'inconvénient d'être sensible aux fluctuations thermiques et aux attaques chimiques du carburant, ce qui conduit à diminuer la fiabilité générale du système de collecte et d'échange des vapeurs entre le réservoir et l'extérieur.

La présente invention remédie à l'ensemble de ces inconvénients.

Elle concerne comme indiqué auparavant, et de manière très générale, un clapet de contrôle de la pression gazeuse interne de réservoirs de liquide coopérant avec un orifice pratiqué dans la partie supérieure de celui-ci, autorisant un écoulement gazeux vers l'extérieur du réservoir lorsque la différence entre la pression interne et la pression externe atteint un seuil prédéterminé, et un écoulement inversé lorsque la pression interne au réservoir est inférieure à la pression externe

Ledit clapet comporte un corps dont la partie inférieure est configurée pour obturer l'orifice du réservoir, d'une masse telle qu'au-delà de ladite valeur différentielle de pression constituant le seuil précité, le corps s'écarte de l'orifice, ledit corps comportant de plus un évidement traversant disposé dans la continuité de l'orifice lorsqu'ils sont en contact, ledit évidement étant à son tour muni de moyens d'obturations activables lorsque la pression différentielle entre le réservoir et l'atmosphère est positive. Une telle configuration apparaît dans le document US-A-4 457 325.

Cette configuration est très compacte, et elle permet d'obtenir un schéma de pression qui est tel que, lorsque le réservoir est en dépression, le fluide peut librement passer depuis l'extérieur, alors qu'il y a blocage du passage dès lors que les pressions s'égalisent, jusqu'à atteindre un seuil de suspension prédéterminé, qui permet alors l'écoulement du fluide depuis le réservoir en surpression vers l'extérieur. Selon une configuration préférentielle, qui sera vue plus en détail dans la suite, un tel clapet peut être intégré, sous forme modulaire, dans une valve anti-retournement. Dans ce cas, le clapet de l'invention présente au surplus l'avantage de ne nécessiter aucune connectique spécifique, ce qui représente un gain en simplicité de montage et en encombrement.

Cette absence de connectique externe se traduit également par un gain en termes de perméabilité par rapport aux normes antipollution précitées.

Cette solution se révèle également économique, car les composants requis, de petite taille, ne présentent pas de difficulté particulière de construction. Enfin, comme on le verra également plus en détail dans la suite, les matériaux utilisés sont peu sensibles aux fluctuations thermiques et aux attaques chimiques du carburant. Ils sont choisis pour présenter une stabilité et une précision dimensionnelle garantissant une tenue des caractéristiques fonctionnelles dans la durée. Le clapet de l'invention offre par conséquent une grande stabilité, et une fiabilité élevée.

Selon l'invention, les moyens d'obturation du corps du clapet sont constitués d'un organe mobile libre en translation avec un jeu radial dans une portion centrale de l'évidement traversant, et pouvant coopérer avec un siège disposé en partie supérieure de ladite portion pour obturer la partie supérieure de l'évidement, ledit organe pouvant de plus reposer en partie inférieure de la portion centrale sur une butée inférieure, sans obturer au moins un conduit formant la partie inférieure de l'évidement traversant, l'organe mobile étant d'une masse et l'évidement traversant ayant une configuration telles que lorsque la pression interne du réservoir dépasse la pression externe, il est repoussé contre le siège supérieur.

Le mécanisme de l'invention est à double détente : lorsque la pression différentielle entre le réservoir et l'extérieur devient positive, la force exercée sur le corps principal n'est pas suffisante pour l'écarter de l'orifice pratiqué dans la paroi supérieure dudit réservoir. Elle est toutefois assez importante pour créer des conditions permettant de repousser l'organe mobile vers le haut, et obstruer ainsi l'évidement pratiqué dans ledit corps, lorsque ledit organe vient au contact de son siège supérieur.

Au-delà d'un certain seuil de différence de pression, la force exercée sur le corps du clapet de l'invention est suffisante pour écarter celui-ci de l'orifice, le fluide s'écoulant alors librement. Il est à noter qu'outre la surpression, les configurations respectives de l'orifice, du siège qui l'entoure et de la partie basse du clapet jouent un rôle dans l'équilibrage des forces.

De préférence encore, l'organe libre en translation dans l'évidement est constitué d'une bille pouvant se déplacer dans une portion centrale d'allure cylindrique de l'évidement traversant.

Selon une possibilité, cette bille est en verre et de surface polie, ce matériau offrant une densité compatible avec le comportement recherché pour la bille dès lors que la pression différentielle entre le réservoir et l'extérieur devient positive.

Plus précisément, le corps du clapet de l'invention est d'allure cylindrique avec une extrémité inférieure sensiblement hémisphérique, l'évidement traversant étant pratiqué dans la direction axiale dudit corps.

Cette forme permet une grande standardisation, et elle autorise de plus une adaptabilité optimale aux besoins du véhicule, car la pression d'ouverture du clapet peut être modifiée en ajustant le diamètre du siège du corps du clapet au niveau de l'orifice pratiqué dans la paroi supérieure du réservoir, sans qu'il soit nécessaire de modifier dimensionnellement le clapet proprement dit.

Pour des raisons liées à la fabrication, la butée inférieure sur laquelle repose la bille et le ou les conduits formant la partie inférieure de l'évidement traversant sont réalisés sur une pièce distincte fixée de façon étanche au corps du clapet.

Selon une possibilité, cette pièce peut être enchâssée à force dans le corps principal, avec une tolérance qui conduit à une étanchéité suffisante.

Le guidage de la bille dans l'évidement central du corps devra bien entendu être très stable dimensionnellement, et le matériau dans lequel ce corps est réalisé sera de préférence du laiton usiné. La pièce inférieure est quant à elle de préférence fabriquée en plastique moulé, ledit plastique étant choisi de telle sorte qu'il ne soit dimensionnellement pas affecté par les vapeurs et/ou le liquide. Il doit en effet conserver ses caractéristiques dimensionnelles, et ne pas gonfler, par exemple, sous l'effet du fluide.

L'invention concerne de plus une application particulière du clapet de contrôle ci-dessus, à un réservoir dont l'orifice est muni, sur la surface extérieure du réservoir, de moyens de guidage en translation du corps du clapet. Dans ce cas, lorsque la pression entre l'intérieur du réservoir et l'extérieur atteint ledit seuil prédéterminé, le clapet s'écarte de manière rectiligne selon l'axe dudit orifice, guidé en translation vers l'extérieur de la paroi.

Plus précisément encore, ce clapet pourra être intégré, comme mentionné auparavant, à une valve anti-retournement disposée dans la paroi supérieure d'un réservoir et dont le corps comporte en sortie extérieure de l'orifice de liaison avec le volume interne du réservoir des moyens de guidage en translation du clapet.

Cette configuration fera l'objet d'une explication détaillée dans la suite de la description.

L'invention va à présent être décrite plus en détail, en référence aux figures annexées, pour lesquelles:
- la figure 1 est une vue en coupe d'une configuration possible du clapet de contrôle de la pression gazeuse interne d'un réservoir selon la présente invention;
- la figure 2 représente une vue en coupe de l'intégration dudit clapet à une valve anti-retournement ;
- les figures 3a à 3c montrent, toujours en section, un détail agrandi du fonctionnement combiné du clapet de l'invention sur son siège dans la valve anti-retournement ; et
- la figure 4 montre la courbe du débit en fonction de la différence des pressions dans les trois cas illustrés aux figures précédentes.

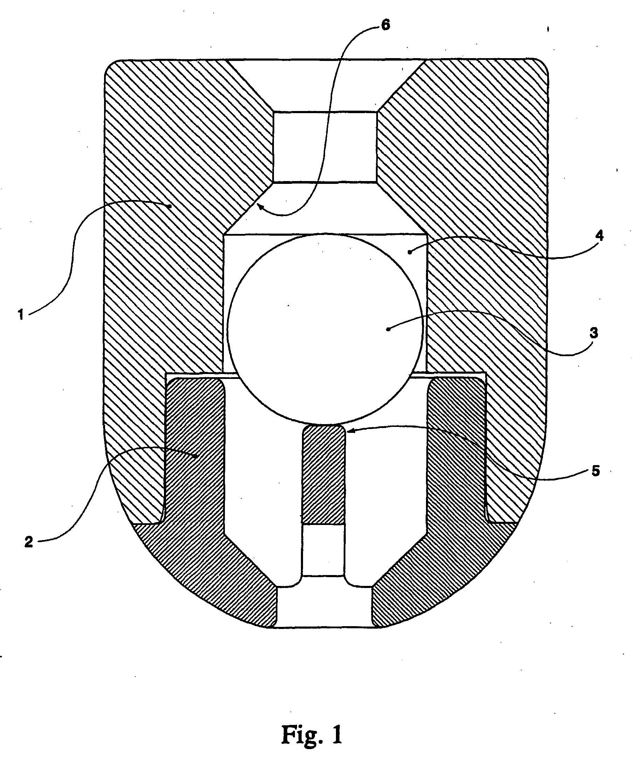

En référence à la figure 1, le clapet (C) de contrôle de la pression gazeuse interne d'un réservoir selon l'invention se compose à titre principal d'un corps (1), par exemple en laiton usiné, et d'une pièce inférieure (2) qui sert notamment de siège à une bille (3), de préférence en verre.

La coopération de ces trois éléments permet d'aboutir à une configuration compacte, dotée d'un évidement ou conduit intérieur (4) axial traversant, permettant dans certaines conditions le passage d'un fluide.

Ainsi, lorsque la bille est dans la position qui est représentée en figure 1, en contact avec une butée inférieure (5) sur lequel elle repose, il y a possibilité d'un écoulement gazeux du fait des dimensions respectives de l'évidement (4) et de la bille (3), permettant un jeu radial.

En d'autres termes, cette dernière présente un diamètre extérieur qui est inférieur au diamètre de la portion centrale cylindrique de l'évidement (4), pour générer une perte de charge en fonctionnement permettant le déplacement de la bille (3) et l'obturation du siège (6).

Dès lors que la bille (3) est repoussée vers le haut, en contact avec le siège supérieur (6), l'écoulement de tout fluide est stoppé du fait du contact circulaire entre la bille (3) et ledit siège supérieur (6).

La pièce inférieure (2) qui sert donc de butée (5) pour la bille (3), vient elle-même au contact d'un siège (12) (voir figures suivantes) pratiqué au niveau de l'orifice supérieur (10) d'un réservoir (non représenté), et elle est enchâssée de manière étanche dans le corps (1) du clapet (C).

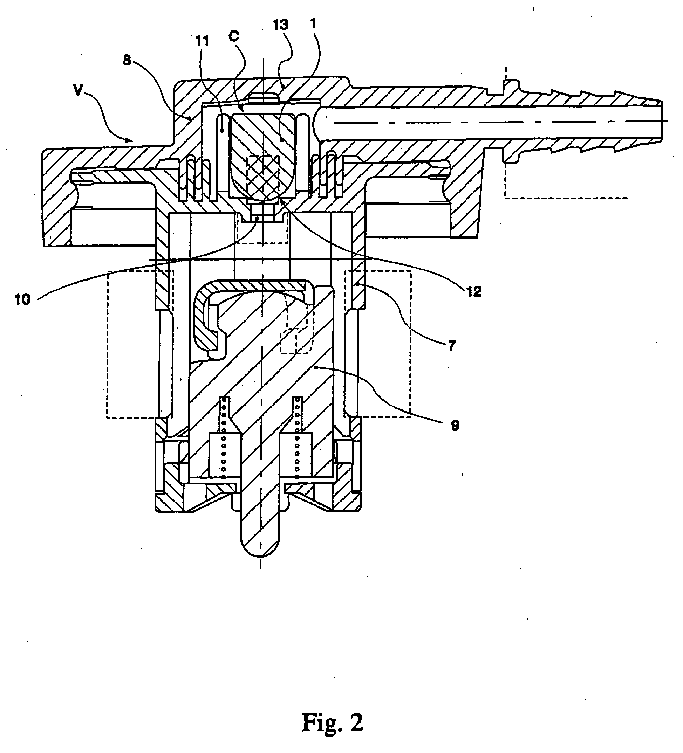

La figure 2 montre ledit clapet (C) intégré à une valve anti-retournement (V) composée essentiellement d'un corps principal (7) fixé à et traversant perpendiculairement la paroi supérieure du réservoir de carburant, et d'un capuchon (8) notamment muni des conduits et inserts permettant la connexion à des tubulures d'admission / échappement vers d'autres composants du circuit. Sans entrer dans les détails, qui ne concernent pas directement l'invention objet de ce texte, le corps (7) de la valve (V) anti-retournement comporte un flotteur (9) permettant de boucher l'orifice (10) en cas de retournement du véhicule ou lorsque le niveau de remplissage du réservoir le porte au contact dudit orifice (10).

Le corps (1) du clapet (C) est disposé entre des parois (11) de guidage en translation permettant un déplacement axial du clapet (C), limité en partie inférieure par le siège (12) disposé au niveau supérieur de l'orifice (10), et en partie supérieure par la paroi supérieure (13) du capuchon (8). Comme cela apparaît sur cette figure, les parois de guidage verticales (11) ne sont pas pleines, mais présentent au contraire des évidements permettant au fluide de passer dans certaines conditions.

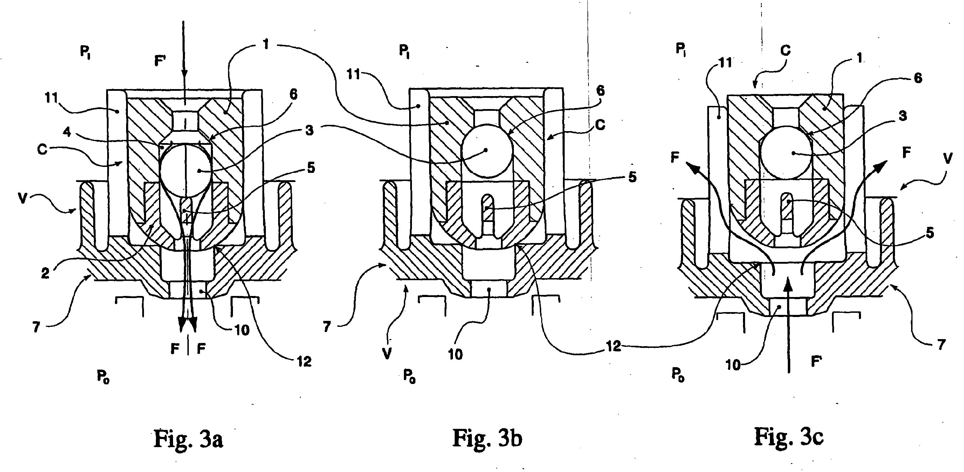

Le détail agrandi des positions relatives du siège (12) disposé en partie supérieure du corps (7) de la valve anti-retournement et des moyens de guidage (11) du clapet (C) de l'invention apparaissent en figures 3a à 3c. La figure 3a représente le cas où la pression interne du réservoir est inférieure à la pression externe. En d'autres termes, il y a une dépression qui s'est créée à l'intérieur du réservoir. Dans ce cas, la bille (3) reposant sur la butée (5) de la pièce inférieure (2) du clapet (C), de l'air provenant de l'extérieur s'écoule du fait de l'existence du jeu entre la bille (3) et la portion centrale de l'évidement (4). Le sens d'écoulement du fluide est montré par les flèches (F, F'). Cet écoulement est possible car les conduits pratiqués dans la pièce inférieure (2) ne sont pas obstrués.

Dans la représentation de la figure 3b, la pression à l'intérieur du réservoir devient égale ou légèrement supérieure à la pression externe. Dans ce cas-là, une force s'exerce sur la bille (3) qui est repoussée contre le siège supérieur (6) du corps principal (1), notamment du fait de la perte de charge créée entre les parois de l'évidement (4) et la bille (3) qui génère une aspiration de cette dernière. Cette force n'étant pas suffisante pour écarter le clapet (C) du siège inférieur (12), aucun écoulement gazeux ne peut plus se produire. Le débit gazeux est par conséquent nul. Dans cette situation, le différentiel de pression est inférieur à la pression seuil qui est en revanche atteinte dans la figure 3c. Dans ce cas, la force qui s'exerce sur le clapet (C) est suffisante pour l'écarter du siège (12), et un fluide peut s'écouler en sens inverse de celui qui s'écoule dans la figure 3a, cette fois de l'intérieur du réservoir vers l'extérieur. Le réservoir est en surpression gazeuse. Les flèches F et F' sont orientées en sens inverse de celles de la figure 3a.

Dans les figures 3a et 3b, le corps (1) du clapet (C) est immobile dans les moyens de guidage (11). Lorsque la pression interne du réservoir continue d'augmenter, il existe une valeur seuil à partir de laquelle le clapet (C) décolle de son siège (12) et permet donc un écoulement positif à travers l'orifice (10). Cette pression est bien entendu dépendante de la masse du clapet, et du diamètre de son siège dans le corps (7) de la valve (V). Les moyens de guidage (11) assurent dans ce cas un guidage purement axial du corps (1) du clapet (C).

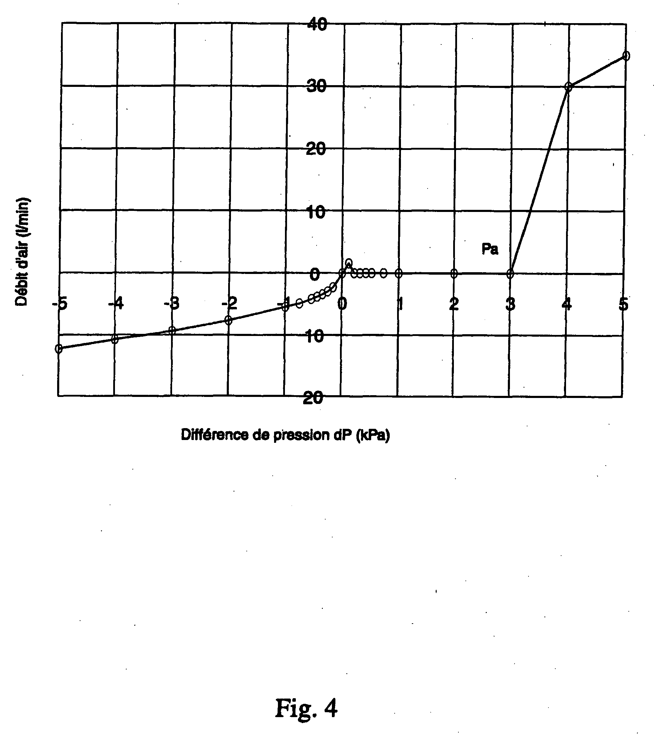

La valeur du seuil au-delà duquel le clapet (C) décolle du siège (12) est référencée Pₐ dans la figure 4, qui illustre le diagramme débit / différence des pressions. Dans l'exemple particulier qui est représenté, le débit devient positif à partir de 3 kPa, valeur seuil Pₐ.

Les avantages du clapet (C) de l'invention ont déjà été mentionnés, mais il est aisé de comprendre à la lumière de la description détaillée ci-dessus que cette solution permet d'aboutir à un encombrement réduit, à l'aide d'un mécanisme qui ne nécessite que trois pièces, et qui peut être installé modulairement dans une valve anti-retournement. On groupe donc les fonctions réalisées jusqu'ici par des valves qui sont dissociées, qui assurent d'une part les fonctions d'anti-retournement, voire empêchant le sur-remplissage, et les fonctions traditionnelles d'équilibrage des pressions entre l'intérieur et l'extérieur du réservoir.

## Revendications

1. Clapet de contrôle (C) de la pression gazeuse interne d'un réservoir de liquide coopérant avec un orifice (10) pratiqué dans la partie supérieure de celui-ci, autorisant un écoulement gazeux vers l'extérieur du réservoir lorsque la différence entre la pression interne et la pression externe atteint un seuil prédéterminé, et un écoulement inversé lorsque la pression interne au réservoir est inférieure à la pression externe, comportant un corps (1) dont la partie inférieure est configurée pour obturer l'orifice (10) du réservoir, d'une masse telle qu'au-delà de ladite valeur différentielle de pression constituant le seuil prédéterminé, le corps (1) s'écarte de l'orifice (10), ledit corps (1) comportant de plus un évidement (4) traversant disposé dans la continuité de l'orifice (10) du réservoir lorsqu'ils sont en contact, ledit évidement (4) étant muni de moyens d'obturations (3) activables lorsque la pression différentielle entre le réservoir et l'atmosphère est positive, **caractérisé en ce que** les moyens d'obturation du corps (1) du clapet (C) sont constitués d'un organe mobile (3) libre en translation avec un jeu radial dans une portion centrale de l'évidement (4) traversant, et pouvant coopérer avec un siège (6) disposé en partie supérieure de ladite portion pour obturer la partie supérieure de l'évidement (4), ledit organe mobile (3) pouvant reposer en partie inférieure de ladite portion centrale sur une butée (5) inférieure, sans obturer au moins un conduit formant la partie inférieure de l'évidement (4) traversant, l'organe mobile (3) étant d'une masse et la configuration de la portion centrale de l'évidement (4) ayant une configuration telles que lorsque la pression interne du réservoir dépasse la pression externe, il est repoussé contre le siège (6) supérieur.

2. Clapet de contrôle (C) de la pression gazeuse interne d'un réservoir selon la revendication précédente, **caractérisé en ce que** ledit organe est constitué d'une bille (3) pouvant se déplacer dans une portion centrale d'allure cylindrique de l'évidement (4) traversant.

3. Clapet de contrôle (C) de la pression gazeuse interne d'un réservoir selon la revendication précédente, **caractérisé en ce que** la bille (3) est en verre et de surface polie.

4. Clapet de contrôle (C) de la pression gazeuse interne d'un réservoir selon l'une quelconque des revendications précédentes, **caractérisé en ce que** le corps (1) est d'allure cylindrique avec une extrémité inférieure sensiblement hémisphérique, l'évidement (4) traversant étant pratiqué dans la direction axiale dudit corps (1).

5. Clapet de contrôle (C) de la pression gazeuse interne d'un réservoir selon l'une quelconque des revendications précédentes, **caractérisé en ce que** la butée (5) inférieure et le ou les conduits formant la partie inférieure de l'évidement traversant sont réalisés sur une pièce (2) distincte fixée de façon étanche au corps (1) du clapet (C).

6. Clapet de contrôle (C) de la pression gazeuse interne d'un réservoir selon l'une quelconque des revendications précédentes, **caractérisé en ce que** le corps (1) est en laiton usiné, alors que la pièce (2) comportant la butée (5) inférieure est en plastique moulé.

7. Application du clapet de contrôle (C) selon l'une quelconque des revendications 4 à 6 à un réservoir dont l'orifice (10) est muni, sur la surface extérieure du réservoir, de moyens de guidage (11) en translation du corps (1) du clapet (C).

8. Application du clapet de contrôle (C) selon l'une quelconque des revendications 4 à 6 à une valve anti-retournement disposée dans la paroi supérieure d'un réservoir et dont le corps (7) comporte en sortie extérieure de l'orifice (10) de liaison avec le volume interne du réservoir des moyens de guidage (11) en translation du clapet (C).

9. Application du clapet de contrôle (C) selon la revendication précédente, **caractérisée en ce que** le réservoir est un réservoir de carburant pour véhicule à moteur thermique.

## Claims

1. Valve (C) for controlling the internal gas pressure inside a liquid tank, collaborating with an orifice (10) made in the upper part of this tank, allowing gas to flow from the outside of the tank when the difference between the internal pressure and the external pressure reaches a predetermined level, and flow in the opposite direction when the pressure internal to the tank is below the external pressure, comprising a body (1), the lower part of which is configured to plug the orifice (10) of the tank, of a mass such that beyond said differential pressure value that constitutes the predetermined level, the body (1) moves away from the orifice (10), said body (1) additionally comprising a through-hole (4) made in the continuation of the orifice (10) of the tank when they are in contact, said hole (4) being equipped with plugging means (3) that can be activated when the differential pressure between the tank and the atmosphere is positive, **characterized in that** the means of plugging the body (1) of the valve (C) consist of a moving member (3) free in terms of translation with radial clearance in a central portion of the through-hole (4) and able to collaborate with a seat (6) arranged in the upper part of said portion to plug the upper part of the hole (4), said moving member (3) being able to rest in the lower part of said central portion on a lower stop (5) without at least plugging a duct forming the lower part of the through-hole (4), the moving member (3) being of a mass and the configuration of the central portion of the hole (4) also being such that when the internal pressure of the tank exceeds the external pressure, it is pushed back against the upper seat (6).

2. Valve (C) for controlling the internal gas pressure of a tank according to the preceding claim, **characterized in that** said member consists of a ball (3) able to move in a central portion of cylindrical appearance of the through-hole (4).

3. Valve (C) for controlling the internal gas pressure of a tank according to the preceding claim, **characterized in that** the ball (3) is made of glass and has a polished surface.

4. Valve (C) for controlling the internal gas pressure of a tank according to any one of the preceding claims, **characterized in that** the body (1) is of cylindrical appearance with a roughly hemispherical lower end, the through-hole (4) being made in the axial direction of said body (1).

5. Valve (C) for controlling the internal gas pressure of a tank according to any one of the preceding claims, **characterized in that** the lower stop (5) and the duct or ducts forming the lower part of the through-hole are made in a separate piece (2) fixed with sealing to the body (1) of the valve (C).

6. Valve (C) for controlling the internal gas pressure of a tank according to any one of the preceding claims, **characterized in that** the body (1) is made of machined brass whereas the piece (2) comprising the lower stop (5) is made of molded plastic.

7. Application of the control valve (C) according to any one of Claims 4 to 6 to a tank the orifice (10) of which is equipped, on the exterior surface of the tank, with means (11) for guiding the translational movement of the body (1) of the valve (C).

8. Application of the control valve (C) according to any one of Claims 4 to 6 to a roll-over valve arranged in the upper wall of a tank and the body (7) of which has, at the external outlet from the orifice (10) for connection with the internal volume of the tank, means (11) for guiding the translational movement of the valve (C).

9. Application of the control valve (C) according to the preceding claim, **characterized in that** the tank is a fuel tank for a vehicle with a combustion engine.

## Patentansprüche

1. Ventil (C) zur Steuerung bzw. Kontrolle des Gasdrucks im Inneren eines Flüssigkeitsbehälters, zum Zusammenwirken mit einer im oberen Teil des Behälters vorgesehenen Zugangs- bzw. Mündungsöffnung (10), wobei das Ventil eine Gasströmung aus dem Behälter nach außen zuläßt, wenn die Differenz zwischen dem Innen- und dem Außendruck einen vorgegebenen Schwellwert erreicht, und eine umgekehrte Strömung gestattet, wenn der Innendruck in dem Behälter niedriger als der Außendruck ist, mit einem Körper (1), dessen unterer Teil zum Verschließen der Mündungsöffnung konfiguriert ist, mit einer solchen Masse, daß jenseits des den vorbestimmten Schwellwert bildenden genannten Werts des Differenzdrucks der Körper (1) sich von der Mündungsöffnung (10) abhebt, wobei der genannte Körper (1) des weiteren eine durchgehende Ausnehmung (4) aufweist, die in der Fortsetzung der Mündungsöffnung (10) des Behälters angeordnet ist, wenn der Körper und die Mündungsöffnung miteinander in Kontakt sind, wobei die genannte Ausnehmung (4) mit Verschlußmitteln (3) versehen sind, die betätigbar sind, wenn die Druckdifferenz zwischen dem Behälter und der Atmosphäre positiv ist, **dadurch gekennzeichnet, daß** die Verschlußmittel des Körpers (1) des Ventils (C) durch ein bewegliches Organ (3) gebildet werden, das mit radialem Spiel in einem mittleren Abschnitt der durchgehenden Ausnehmung (4) translatorisch frei beweglich ist und mit einem im oberen Teil des genannten Teils angeordneten Sitz (6) zusammenwirken kann, um das obere Teil der Ausnehmung (4) zu verschließen, daß das genannte bewegliche Organ (3) im unteren Teil des genannten mittleren Teils auf einem Anschlag (5) aufruhen kann, ohne hierbei wenigstens eine den unteren Teil der durchgehenden Ausnehmung (4) bildende Leitung zu verschließen, und daß das bewegliche Organ (3) eine solche Masse und der mittlere Abschnitt der Ausnehmung eine solche Konfiguration besitzen, daß wenn der Innendruck in dem Behälter den äußeren Druck übersteigt, das bewegliche Organ gegen den oberen Sitz (6) gedrückt wird.

2. Ventil (C) zur Kontrolle des Gasdrucks im Inneren eines Behälters, nach dem vorhergehenden Anspruch, **dadurch gekennzeichnet, daß** das genannte Organ von einer Kugel (3) gebildet wird, welche in einem zylindrisch ausgebildeten mittleren Teil bzw. Abschnitt der durchgehenden Ausnehmung (4) verschieblich ist.

3. Ventil (C) zur Kontrolle des Gasdrucks im Inneren eines Behälters, nach dem vorhergehenden Anspruch, **dadurch gekennzeichnet, daß** die Kugel (3) aus Glas besteht und eine polierte Oberfläche aufweist.

4. Ventil (C) zur Regelung des Gasdrucks im Inneren eines Behälters, nach einem der vorhergehenden Ansprüche, **dadurch gekennzeichnet, daß** der Körper (1) zylindrische Form mit einem im wesentlichen halbkugelförmigen unteren Ende besitzt, und daß die durchgehende Ausnehmung (4) in der Achsialrichtung des Körpers (1) ausgebildet ist.

5. Ventil (C) zur Kontrolle des Gasdrucks im Inneren eines Behälters, nach einem der vorhergehenden Ansprüche, **dadurch gekennzeichnet, daß** der untere Anschlag (5) und die den unteren Teil der durchgehenden Ausnehmung bildende(n) Leitung(en) an einem gesonderten Teil (2) ausgebildet sind, das dichtschließend mit dem Körper (1) des Ventils (C) verbunden ist.

6. Ventil (C) zur Kontrolle des Gasdrucks im Inneren eines Behälters, nach einem der vorhergehenden Ansprüche, **dadurch gekennzeichnet, daß** der Körper (1) ein Messing-Formkörper ist, während das den unteren Anschlag (5) aufweisende Teil (2) ein Kunststoff-Formkörper ist.

7. Verwendung des Ventils (C) nach einem der Ansprüche 4 bis 6 an einem Behälter, dessen Zugangs- bzw. Mündungsöffnung (10) an der Außenoberfläche des Behälters mit Führungsmitteln (11) für die translatorische Verschiebung des Ventilkörpers (C,1) versehen ist.

8. Verwendung des Ventils (C) nach einem der Ansprüche 4 bis 6 an einem in der oberen Wandung eines Behälters angeordneten Antikipp-Ventil, dessen Körper (7) an der Austrittsseite der Mündungsöffnung (10) der Verbindung mit dem Innenvolumen des Behälters Führungsmittel (11) für die Translationsverschiebung des Ventils (C) aufweist.

9. Verwendung des Kontrollventils (C) nach dem vorhergehenden Anspruch, **dadurch gekennzeichnet, daß** der Behälter ein Treibstoffbeälter für einen Fahrzeug-Verbrennungsmotor ist.
